# EUROPEAN PATENT APPLICATION

(11) **EP 4 427 599 A1**
(43) Date of publication of application: **11.09.2024**
(21) Application number: 24162472.5
(22) Date of filing: 08.03.2024
(51) Int. Cl.: A23J 1/00, A23J 1/12, A23J 3/14, A23L 33/185, C12F 3/06

(54) **METHOD OF PROTEIN EXTRACTION**

(30) Priority: 10.03.2023 PL 44406323
(71) Applicant: Proteinrise Spólka z ograniczona odpowiedzialnoscia, 02-972 Warszawa (PL)
(72) Inventor: TRUSEK, Anna, 52-214 Wroclaw (PL); JÓZWIAK, Michal, 02-972 Warszawa (PL)
(74) Representative: Korbela, Anna

(57) **Abstract**

The subject of the invention is a method of extracting protein from dried brewer's spent grain, which exists in the form of initial, unground granules (material with a diameter ranging from 3 to 6 cm) or ground granules (material with a diameter ranging from 0.3 to 2.9 cm) originating from beer production, i.e., spent grains. The protein extraction process occurs with the use of spent grains in an amount ranging from 20 to 350 grams per 1 litre of alkaline solution, for a period of 30 minutes to 48 hours under high-temperature conditions, i.e., at a temperature of at least 50°C. Subsequently, filtration or centrifugation is carried out to achieve a liquid mass fraction in the solid material below 30%. Purification of the protein solution, along with removal of the alkali, is performed using water on a membrane installation equipped with an ultrafiltration or dialysis membrane having pores ranging in size from 1 to 20 kDa.

## Description

The subject of the invention is a method for extracting protein, which can be used in the food industry, but also as a supplement (natural protein shake) for people practicing sports.

Proteins are substances whose molecules are mainly composed of carbon, hydrogen, oxygen, and nitrogen atoms.

Proteins are macromolecular compounds composed of amino acid residues. The diversity of proteins is vast, although there are twenty basic protein amino acids. It is important which amino acids are included in the protein and how they are connected to each other. Amino acids are linked by peptide bonds.

Proteins are conventionally referred to as compounds whose chains contain more than 100 amino acid residues, while compounds with shorter chains are classified as polypeptides. Proteins can have different spatial structures, including peptide chains twisting into spirals or strands.

Proteins are the fundamental building blocks of all organisms. Humans need to obtain proteins from food. These proteins are broken down into smaller fragments during the process of digestion, from which new proteins essential for the body are formed. Proteins are found in foods such as dairy products, eggs, meat, and legumes. The protein content in food products varies, which should be taken into account when selecting foods consumed throughout the day. The daily recommended intake of protein depends on the individual characteristic of the body - it depends, among others, on age and gender, but also on physical activity.

Proteins serve a structural role (building muscles, nails, hair, and tissues). Their digestion occurs with the involvement of enzymes. Protein is the main component of haemoglobin found in the blood. Haemoglobin is responsible for delivering oxygen to cells.

As indicated above, proteins play an important role in the muscle-building process in the body. Therefore, for physically active individuals, the amount of protein from food products may be insufficient, and they may need to supplement their protein intake. Additionally, individuals following a vegan or vegetarian diet seek alternatives to protein from meat, eggs, or dairy products.

There is a solution known from the US patent application No. US2022151260 A1 titled "NUTRITIONAL COMPOSITIONS FROM BREWERS' SPENT GRAIN AND METHODS FOR MAKING THE SAME," with a priority date of 3 June 2019. This document presents methods for isolating fibre and protein from brewer's spent grain. In some cases, the protein preparation has reduced fat content. In some cases, the protein preparation has improved protein digestibility score adjusted for amino acid content.

There is a solution known from the description of the patent application No. WO2012069889 A1 titled "INTEGRATED PROCESS FOR EXTRACTING PROTEINS AND ARABINOXYLANS FROM BREWER'S SPENT GRAIN," with a priority date of 24 November 2010. The solution proposes an integrated process for extracting proteins and arabinoxylans from brewer's spent grain without the need for any preliminary treatment of the spent grain by using alkaline reagents, followed by selective precipitation through acidification of the medium and addition of ethanol. This invention finds application in areas of reutilization or valorisation of brewer's spent grain to obtain products that can be used as ingredients in the food industry and in the production of dietary and pharmaceutical products. The final residue obtained after the extraction of proteins and arabinoxylans can be used as a source of cellulose, as insoluble dietary fibre, or potentially as fuel or raw material for the paper industry.

Additionally, there is a solution known from the description of the US patent No. US11206851 B2 titled 'Process for producing protein concentrate or isolate and cellulosic thermochemical feedstock from brewer's spent grains,' with a priority date of 17 January 2017. This solution presents the process of treating brewer's spent grain to produce a high-value protein product and cellulose residue, also from the unfermented brewer's spent grain. The high-value protein product is useful as a protein supplement or feed for livestock and poultry, while the cellulose residue has value as a raw material for thermochemical processing units, such as biofuel production.

There is a solution known from the description of the US patent application No. US2016194679 A1 titled "Process for Producing Protein Concentrate or Isolate and Cellulosic Thermochemical Feedstock from Distillers Grains," with a priority date of 7 January 2014. The developed process in the American solution allows for the production of a high-value protein product and cellulose residue from distiller's grain. The high-value protein product is useful as a protein supplement or feed for livestock and poultry, while the cellulose residue has value as a raw material in a thermochemical processing unit for biofuel production.

Brewer's spent grain (also known as draff) is a by-product generated during beer production. From 100 kg of malt used in beer production, approximately 130 kg of fresh spent grain consisting of husks, sprouts, and malt particles is obtained. This by-product from the brewing industry is commonly used in cattle feed.

So far, in the methods known from the state of the art, protein extraction has been conducted in either an alkaline or acidic environment.

The aim of the described invention is to develop a method that will allow for more efficient and significantly different utilization of waste brewer's spent grain by proposing a method ensuring effective extraction of the protein contained in it. Conducting this process usually involves mixing the raw material, which allows for a significant reduction in extraction time and an increase in the process efficiency. Additionally, the developed method allows for the production of a homogeneous concentrate that is ready for consumption without further processing. The invention also enables the management of waste to make it human-friendly.

The essence of the method for extracting protein from dried brewer's spent grain, i.e. draff, which comes from beer production, is that the protein extraction occurs using the spent grain in an amount ranging from 20 to 350 grams per 1 litre of solution with an alkaline pH.

This process is conducted for a duration ranging from 30 minutes to 48 hours under high-temperature conditions, at a temperature of at least 50°C.

Next, filtration or centrifugation is carried out to achieve a liquid mass fraction in the solid material below 30%, and the purification of the protein solution along with the removal of alkali is performed using water in a membrane installation with an ultrafiltration or dialysis membrane equipped with pores ranging in size from 1 to 20 kDa.

Preferably, the spent grains are unground granules with a diameter ranging from 3 to 6 cm.

Typically, spent grains are ground granules with a diameter ranging from 0.3 to 2.9 cm.

Protein extraction can occur with mechanical mixing of spent grains with the solution at a rate ranging from 50 to 350 revolutions per minute.

Favourably, during ultrafiltration, pressure ranging from 0.1 to 0.4 MPa is used.

Most commonly, water is used during repeated diafiltration.

It is recommended to conduct the extraction process in a vessel under increased pressure.

The advantage of the solution according to the invention is the development of a method that allows for a more efficient utilization of waste brewer's spent grain. The protein extraction process usually involves mixing the raw material, which significantly reduces the extraction time and increases process efficiency. Additionally, the developed method allows for obtaining a homogeneous concentrate that is ready for consumption without further processing.

Another advantage of the solution according to the invention is the possibility of the environmentally friendly waste management and making it human-friendly.

The subject of the invention is a method for extracting protein from dried brewer's spent grain originating from beer production. The used dried brewer's spent grain, also known as "draft," may exist in the form of initial, unground granules (material with a diameter ranging from 3 to 6 cm) or ground granules (material with a diameter from 0.3 to 2.9 cm). In the developed method, spent grains are used in an amount ranging from 20 to 350 grams per 1 litre of alkaline solution, preferably using sodium hydroxide (NaOH).

The developed extraction process is conducted for a minimum of 30 minutes and a maximum of 48 hours. The extraction is carried out in a high-temperature environment, namely at a temperature of at least 50°C. Preferably, the extraction process is conducted in a vessel under increased pressure.

Favourably, the protein extraction process using the method described in the invention takes place with mechanical mixing at speeds ranging from 50 to 350 revolutions per minute.

Filtration or centrifugation, carried out by known methods, to achieve a liquid mass fraction in the solid material below 30%, precedes the concentration or further purification process of the extract and directing the liquid stream to the membrane installation.

Concentration or further purification of the protein solution along with the removal of alkali (through diafiltration) is carried out on a membrane installation equipped with an ultrafiltration or dialysis membrane having pores ranging in size from 1 to 20 kDa (kilodaltons). The diafiltration process is conducted with the use of water. Dialysis is carried out without pressure with water uptake. During ultrafiltration, pressure ranging from 1 to 4 bar (0.1 to 0.4 MPa) is applied. Preferably, diafiltration is performed multiple times with the use of water.

The protein extraction method was tested on dried brewer's spent grain originating from beer production in sample sizes ranging from 20 to 350 grams per litre of solution. Both initial unground granules (material with a diameter ranging from 3 to 6 cm) and ground granules (material with a diameter ranging from 0.3 to 2.9 cm) were used. The protein content in the raw material (brewer's spent grain waste) was estimated based on total nitrogen analysis to be in the range of 20 to 24% of the above-mentioned.

### 1 EXAMPLE OF EXECUTION

### Protein extraction from the raw material

The research was conducted using dried brewer's spent grain - both initial and ground, in the amount of 250 g/L. A 0.1 M NaOH solution was used as the solvent, as well as water (not covered by the scope of the invention) for comparison. The extraction was carried out for 1 hour. The research was conducted within the scope covered by the invention, as well as comparatively at different temperature ranges, i.e., at 30°C, 50°C with mixing at 100 rpm, and at 120°C without mixing. The protein concentration in the solutions was determined using the Lowry method, and reducing sugars were determined using the DNS method.

The obtained concentrations and yields are presented in the table below:

| **Type of extraction** | **Protein concentration [g/L]** | **Recovery yield [%]** | **Concentration of reducing sugars [g/L]** |
|---|---|---|---|
| Water - unground spent grains | | | |
| 120°C | 3.764 | 7.36 | 10.205 |
| 50°C | 2.313 | 4.52 | 8.337 |
| 30°C | 1.191 | 2.33 | 3.440 |
| Water - ground spent grains | | | |
| 120°C | 4.081 | 7.98 | 10.501 |
| 50°C | 2.658 | 5.20 | 8.724 |
| 30°C | 1.081 | 2.11 | 4.077 |
| 0.1 M NaOH - unground spent grains | | | |
| 120°C | 20.569 | 40.23 | 5.990 |
| 50°C | 9.520 | 18.62 | 7.152 |
| 30°C | 3.626 | 7.09 | 5.877 |
| 0.1 M NaOH - ground spent grains | | | |
| 120°C | 18.862 | 36.89 | 4.100 |
| 50°C | 11.870 | 23.22 | 8.724 |
| 30°C | 4.292 | 8.40 | 5.421 |

Sodium hydroxide is a better protein extractor than water. Elevated temperature increases protein extraction efficiency. No significant difference was observed between ground and initial spent grains. The extract, besides proteins, contains reducing sugars (other substances were not identified).

Extraction at high temperatures is very efficient. The protein extraction yield is close to 90% of the total protein mass present in the spent grain. The lower the solid content (e.g., 5%), the higher the extraction efficiency, but the solution (extract) is more diluted. The protein content in the dried mass is less than 40%.

Next, in the filtration process, a liquid mass fraction in the solid material below 30% was obtained.

Filtration was performed using a high-pressure installation with a nylon flat screen with a pore size of 3 micrometres. The pressure was increased during the process from 0.5 to 4 bars (0.05-0.4 MPa). The process was conducted periodically until the filtrate flow decreased by 90% of the initial value. The filtrate was used for further analysis.

### Concentration + diafiltration

The research was conducted on a membrane installation equipped with a single-channel ceramic membrane (filtration area 0.02 m²) containing pores sized 5 and 15 kDa. The initial medium used was the extract obtained from unground spent grain for high-temperature extraction conducted for 1 hour with stirring. After collecting 80% of the volume (320 mL) as permeate, diafiltration was carried out with water added to the initial volume (400 mL). The protein concentration was analysed using the Lowry method.

| | **INITIAL EXTRACT** | | **5-FOLD CONCENTRATION** | | | **DIAFILTRATION (single stage)** | | |
|---|---|---|---|---|---|---|---|---|
| | **Protein concentration [g/L]** | **Protein content [%]** | **Protein concentration [g/L]** | **Protein content [%]** | **Protein loss [%]** | **Protein concentration [g/L]** | **Protein content [%]** | **Protein loss [%]** |
| 15 kDa | 8.894 | 37.10 | 35.776 | 41.23 | 19.6 | 33.88 | 44.02 | 23.8 |
| 5 kDa | | | 40.996 | 43.54 | 7.8 | 37.89 | 47.29 | 14.8 |

### 2 EXAMPLE OF EXECUTION

In the second example of execution, the protein extraction from the raw material and concentration with diafiltration are the same as in the first example of execution. However, a liquid mass fraction in the solid material below 30% was obtained through centrifugation.

Centrifugation was carried out using a sedimentation centrifuge with tube inserts with a capacity of 80 ml. Centrifugation was performed at 2 x 6000 rpm, and the supernatant was decanted for further purification procedures.

## Claims

1. A method of extracting protein from dried brewer's spent grain originating from beer production, known as draff, **is characterized by** the fact that the protein extraction process occurs with the use of spent grains in an amount ranging from 20 to 350 grams per 1 litre of alkaline solution, for a period of 30 minutes to 48 hours under high-temperature conditions, at a temperature of at least 50°C, subsequently, filtration or centrifugation is carried out to achieve a liquid mass fraction in the solid material below 30% and purification of the protein solution, along with removal of the alkali, is performed using water on a membrane installation equipped with an ultrafiltration or dialysis membrane having pores ranging in size from 1 to 20 kDa.

2. The protein extraction method, according to claim 1, **is characterized by** the fact that the spent grains are unground granules with a diameter ranging from 3 to 6 cm.

3. The protein extraction method, according to claim 1 or 2, **is characterized by** the fact that the spent grains are ground granules with a diameter ranging from 0.3 to 2.9 cm.

4. The protein extraction method, as described in one of claims 1 to 3, **is characterized by** the fact that the protein extraction process occurs through mechanical mixing of spent grains with the solution at a rate of 50 to 350 revolutions per minute.

5. The protein extraction method, according to one of claims 1 to 4, **is characterized by** the fact that the pressure applied during the ultrafiltration ranges from 0.1 to 0.4 MPa.

6. The protein extraction method, according to one of claims 1 to 5, **is characterized by** the fact that water is used during repeated diafiltration.

7. The protein extraction method, according to one of claims 1 to 6, **is characterized by** the fact that the extraction process is conducted in a vessel under increased pressure.
